**Europäisches Patentamt**

(19) **European Patent Office**

**Office européen des brevets**

(11) Numéro de publication: **0 108 021**
**B1**

(12) **FASCICULE DE BREVET EUROPEEN**

(45) Date de publication du fascicule du brevet:
07.01.87

(21) Numéro de dépôt: **83402101.6**

(22) Date de dépôt: **27.10.83**

(51) Int. Cl.⁴: **C 03 B 37/08**

(54) Dispositif de fibrage destiné à la fabrication de fibres de verre continues.

(30) Priorité: **28.10.82 FR 8218062**

(43) Date de publication de la demande:
**09.05.84 Bulletin 84/19**

(45) Mention de la délivrance du brevet:
**07.01.87 Bulletin 87/2**

(84) Etats contractants désignés:
**BE DE FR GB IT SE**

(56) Documents cités:
**EP - A - 0 029 779**
**EP - A - 0 066 506**
**US - A - 3 574 581**

(73) Titulaire: **VETROTEX SAINT-GOBAIN, 767 quai des Allobroges, F-73000 Chambéry (FR)**

(72) Inventeur: **Lecron, Jacques, 77 rue des Comtes, F-73190 Challes les Eaux (FR)**
Inventeur: **Manera, Maxime, 12 rue du Sécheron Jacob Bellecombette, F-73000 Chambery (FR)**
Inventeur: **Faure, Jean-Paul, Tormery Chignin, F-73800 Montmelian (FR)**
Inventeur: **Renaudin, Jean Pierre, Begon St-Sulpice, F-73160 Cognin (FR)**

(74) Mandataire: **Breton, Jean-Claude et al, SAINT-GOBAIN RECHERCHE 39, quai Lucien Lefranc, F-93304 Aubervilliers (FR)**

Il est rappelé que: Dans un délai de neuf mois à compter de la date de publication de la mention de la délivrance du brevet euro-péen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention est relative à un dispositif destiné à la fabrication de fibres de matières minérales thermoplastiques, par étirage de la matière fondue sortant des orifices d'une plaque perforée comprenant un grand nombre d'orifices.

Elle concerne en particulier la fabrication de fibres de verre continues par étirage mécanique de filets et de filaments formés en aval de la plaque perforée, ces filaments étant bobinés sur un support généralement cylindrique.

Parmi les différents dispositifs relevant de la technique antérieure, il en existe un certain nombre comprenant des filières dont le fond est perforé d'un grand nombre d'orifices, généralement très rapprochés.

Pour ces filières, le principal objectif à atteindre est d'éviter ou de limiter la submersion de la face inférieure du fond par le verre fondu. Ce phénomène, appelé enverrage, peut apparaître aussi bien au moment du démarrage de la filière qu'en cours d'étirage des filaments.

Différentes solutions ont été préconisées pour résoudre cette difficulté. En général ces solutions prévoient séparément ou en combinaison, le refroidissement permanent du fond de la filière par l'action d'un flux gazeux, un mode de disposition particulière des orifices sur ledit fond, une structure particulière du fond de la filière.

Par rapport à l'invention décrite ci-après, les antériorités suivantes illustrent bien la technique connue dans ce domaine.

Le brevet américain US-A-3574581 décrit des filières alimentées en verre fondu mis sous pression, dont le fond est conçu pour résister à ladite pression. Ainsi ce fond peut être constitué par une mince feuille métallique repliée un certain nombre de fois en formant une série d'ondulations dont les parois sont jointives. Cette structure définit une série de canaux parallèles, à base arrondie, perforé chacun d'une rangée d'orifices. Le fond peut être également constitué de deux plaques soudées localement, qui délimitent un compartiment intermédiaire entre l'intérieur de la filière et les zones perforées à partir desquelles sont formés les filaments: la plaque supérieure, qui confère la rigidité au fond, est épaisse et munie à base d'une série du protubérances, sur la face inférieure desquelles est soudée une seconde plaque beaucoup plus mince; cette dernière présente une série de très petites cavités, délimitées extérieurement par des calottes sphériques perforées par un ou plusieurs orifices.

Dans l'un ou l'autre cas, les difficultés dues à l'enverrage sont surmontées grâce à l'action de la pression qui permet d'extruder les filaments.

Mais le maintien du verre fondu sous une pression de l'ordre d'une dizaine de bars ne va pas sans poser quelques problèmes peu faciles à résoudre (assemblage de précision des pièces du dispositif assurant la mise sous pression du verre; fiabilité de ce dispositif fonctionnant à des températures élevées; étanchéité du réseau de distribution du verre fondu sous pression).

Un autre moyen de maitriser l'enverrage est proposé par la demande de brevet français FR-A-2334637. Ce dernier décrit un type de filière dont le fond est formé d'une simple plaque plane, perforée d'une multiplicité d'orifices; ces orifices sont disposés par zones, chacune comprenant plusieurs dizaines d'orifices étroitement appariés par groupe de deux ou trois.

Cette disposition permet tout à la fois de successivement maitriser l'enverrage lors du démarrage de la filière, et d'éviter sa propagation lorsqu'un filament casse accidentellement.

Ceci implique l'action permanente d'un (ou plusieurs) jet d'air dirigé vers le fond de la filière.

Avec ce mode de refroidissement et ce type de fond, il est difficile d'éviter des variations très localisées de la température du verre, pouvant conduire à une rupture en chaîne ou à un enverrage non contrôlé.

La présente invention a pour objet un dispositif comprenant une filière chauffée par effet Joule et destinée à la fabrication de fibres de verre continues par étirage mécanique, qui permet d'obtenir un enverrage limité et stable sur des zones perforées d'une multitude d'orifices.

La présente invention a pour objet une filière dont le fond est percé d'un grand nombre d'orifices à partir desquels il est possible d'étirer mécaniquement de manière stable des filaments de verre continus de faible diamètre.

La filière selon l'invention équipe une installation de fibrage telle que définie ci-après.

L'installation de fibrage comprend essentiellement une source d'alimentation en verre fondu, reliée à une filière réalisée à partir de plaques planes métalliques, un dispositif de soufflage de gaz dirigé vers le fond de la filière, des moyens d'enduction des filaments de verre ainsi que des organes de guidage et d'étirage mécanique desdits filaments; le fond de la filière est formé d'une plaque plane, dont l'épaisseur totale est telle qu'elle permet d'éviter les déformations dudit fond, dans laquelle sont ménagés une multitude de conduits s'ouvrant à leur partie supérieure vers l'intérieur de la filière, à leur partie inférieure vers une multitude de cellules, chaque cellule étant en communication avec l'intérieur de la filière par l'intermédiaire d'un desdits conduits, une paroi continue fermant la base de chaque cellule, ladite paroi étant perforée de plusieurs orifices et présentant une face inférieure externe plane, et dont l'épaisseur est telle qu'elle autorise des débits élevés à partir desdits orifices.

Cette installation peut également comporter des organes refroidisseurs, implantés à proximité du fond de la filière, et susceptibles de coopérer avec le flux gazeux dirigé vers le fond de ladite filière.

Une des caractéristiques préférées de l'invention consiste en ce que la base des conduits et le sommet des cellules en communication avec lesdits conduits sont situés dans un même plan.

Selon une autre caractéristique préférée de l'invention, chaque conduit débouche sur une ou plusieurs cellules.

Les conduits débouchant sur une ou plusieurs cellules peuvent avoir une section uniforme sur toute leur hauteur. Lorsque chaque conduit débouche sur une seule cellule la section desdits conduits peut être égale à la section de la cellule correspondante, au point de raccordement de ladite cellule avec ledit conduit. Chaque cellule peut avoir également une section uniforme sur toute sa hauteur.

L'invention et ses différentes caractéristiques préférées sont exposées dans la description détaillée, donné ci-après, en référence aux figures suivantes:

La fig. 1 est une vue de face, dont certaines parties sont arrachées, et qui représente schématiquement une installation de fibrage équipée d'une filière selon l'invention;

la fig. 2 est une coupe verticale d'une partie du fond d'une filière selon une première variante;

la fig. 3 est une vue en plan de la face supérieure d'une partie du fond de la filière, tel que représenté par la fig. 2;

la fig. 4 est une vue en plan de la face supérieure d'une partie du fond de la filière selon une deuxième variante;

la fig. 5 est une coupe verticale d'une partie du fond d'une filière selon une troisième variante;

la fig. 6 est une vue en plan de la face inférieure d'une partie d'un fond de filière d'après l'invention, selon une quatrième variante;

la fig. 7 est une vue en plan, à une échelle plus petite que la précédente, de la face inférieure d'une partie du fond représenté fig. 6, et montrant la répartition des orifices sur ledit fond;

la fig. 8 est une vue en plan de la face inférieure d'une partie d'un fond de filière d'après l'invention, selon une cinquième variante;

la fig. 9 est une vue en plan, à une échelle plus petite que la précédente, de la face inférieure d'une partie du fond représenté fig. 8 et montrant la répartition des orifices sur ledit fond.

La filière 10, généralement fabriquée à partir de plaques planes en alliage de platine, est munie de bornes 11 pour l'arrivée du courant électrique utilisé pour son chauffage par effet Joule. Elle contient du verre fondu qui s'écoule par des orifices répartis sur la face inférieure d'une plaque plane 12, selon une multitude de groupements de plusieurs orifices O situés à l'aplomb de chaque cellule. La filière communique avec une source d'alimentation en verre de type connu qui peut être soit l'avant-corps d'un four à fusion directe à partir duquel le verre s'écoule dans la filière directement à l'état fondu, soit un système d'alimentation amenant le verre sous forme de billes, ces dernières étant alors refondues dans la filière. Quelle que soit la source d'alimentation utilisée, l'écoulement du verre fondu à travers les orifices est assuré essentiellement par la pression hydrostatique de la masse en fusion se trouvant au-dessus de la plaque. Le verre est étiré en filaments élémentaires 13, de façon classique, par l'intermédiaire d'une broche tournante 14. Après dépôt d'ensimage au moyen d'un organe ensimeur schématisé en 15, les filaments sont rassemblés en un ou plusieurs fils 16 par les organes habituellement employés dans cette technique, tels que les peignes 17 et 18; le fil est ensuite bobiné autour de la broche tournante 14, le long de laquelle il se déplace sous l'influence d'un organe de répartition ou hélice 19.

Une rampe de soufflage 20, munie par exemple d'une série d'ouvertures 21, est installée à proximité et au-dessous du plan de fibrage, les ouvertures 2 étant dirigées vers le fond de la filière. Lesdites ouvertures peuvent être constituées de buses ou de trous très rapprochés, disposés parallèlement à l'axe longitudinal de la filière.

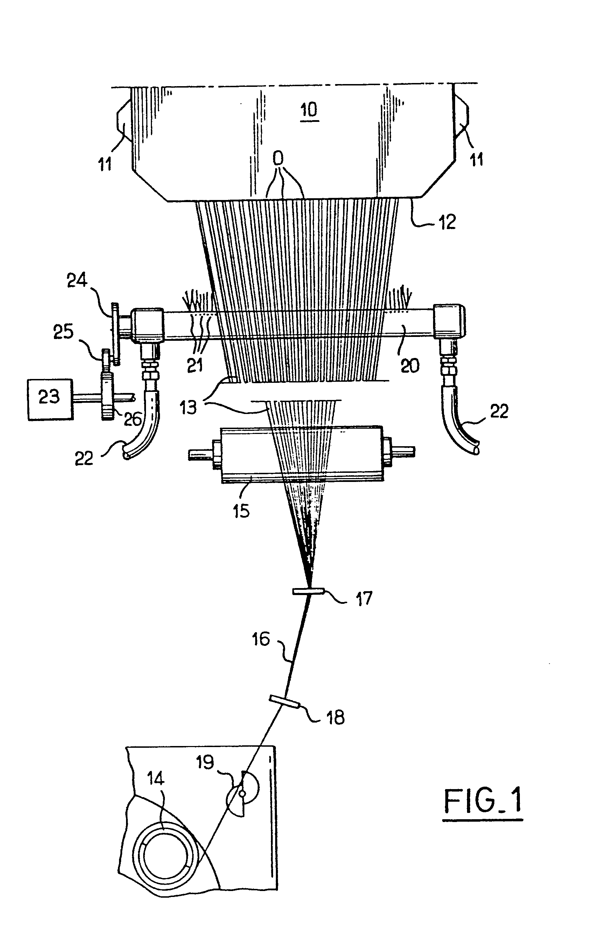

La rampe 20 est raccordée par les conduits 22 à une source de gaz non représentée. Elle peut être montée fixe, rotative ou oscillante. Dans ce dernier cas, illustré à la fig. 1, l'une de ses extrémités est reliée à un moteur par l'intermédiaire d'un bras 24 muni d'un galet 25 appliqué sur la portée d'une came 26 fixée sur l'axe du moteur. D'autres modes de soufflage connus de l'homme de l'art peuvent être adaptés sur l'installation équipée des filières selon l'invention.

Le flux gazeux dirigé vers la face inférieure de la plaque 12 peut être utilisé uniquement au moment du démarrage de l'opération de fibrage ou pendant toute la durée de cette dernière. Ceci dépend de la disposition des différents groupements d'orifices O sur le fond de la filière, du nombre d'orifices par groupement, de la présence ou de l'absence d'organes refroidisseurs.

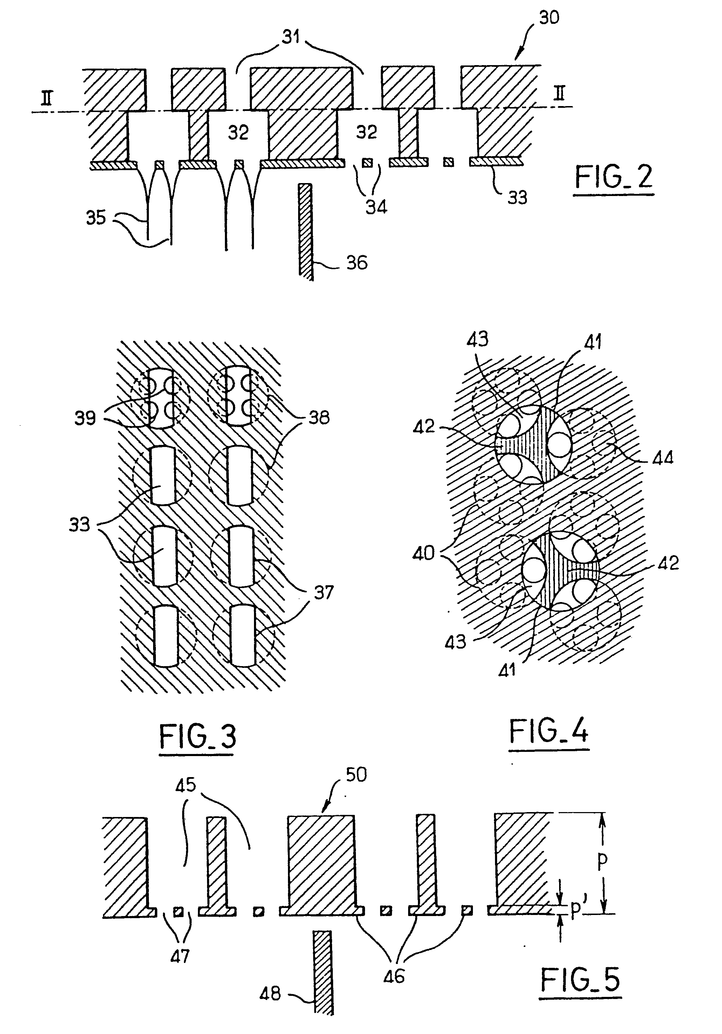

La fig. 2 représente une des variantes de la filière selon l'invention.

Dans cet exemple, le fond de la filière est constitué d'une plaque 30 en alliage de platine, résistant à l'oxydation à haute température, tel que l'alliage formé à 90% de platine et à 10% de rhodium.

Une multitude de conduits 31 sont ménagés dans la partie supérieure de la plaque 30; il s'ouvrent à leur partie supérieure vers l'intérieur de la filière, et à leur partie inférieure sur une multitude de cellules 32. La base des conduits et le sommet des cellules en communication avec lesdits conduits sont situés dans un même plan II–II. Les cellules 32 sont ménagées dans la partie inférieure de la plaque 30 et sont fermées à leur base par une paroi formée ici d'une plaque 33 de faible épaisseur; cette plaque 33 est fixée à la plaque 30 par tout moyen de soudage adéquat connu de l'homme de l'art.

A l'aplomb des cellules 32, la plaque 33 est perforée de plusieurs orifices 34 au travers desquels le verre s'écoule pour donner naissance à des filaments continus 35. Dans la variante représentée à la fig. 2, les conduits 31 ont une section identique sur toute leur hauteur et se raccordent, après un décrochement, aux cellules 32 qui ont une section supérieure à celle des conduits. Ces cellules peuvent également présenter une section uniforme sur toute leur hauteur. Des organes refroidisseurs, tels que des ailettes 36, peuvent être disposés à proximité de la plaque 33.

La fig. 3, qui est une vue en plan d'une partie de la face supérieure du fond de la même filière, montre les différences existant entre les sections des conduits 37 et des cellules 38; dans le cas présent, ces dernières sont de forme circulaire. La plaque 33 est perforée d'orifices 39, à raison de quatre orifices par cellule; ces orifices sont disposés régulièrement aux sommets d'un carré dont le centre coïncide avec celui de la base de la cellule.

La plaque 33 est en alliage de platine, identique à celui formant la plaque 30 ou différent et choisi notamment en fonction du degré de mouillabilité qu'il présente vis-à-vis du verre fondu utilisé. Un alliage dont le degré de mouillabilité est relativement faible peut limiter, voire supprimer le phénomène d'enverrage.

Dans le cas du verre E, verre généralement utilisé pour la fabrication de fibres continues, il en est ainsi avec un alliage de 93% de platine, 3% d'iridium et 4% d'or. L'angle de contact du verre E sur une plaque formée d'un tel alliage, portée à 1150 °C, est de 75° alors qu'il est de 39° à la même température sur une plaque de platine rhodié à 10%.

D'autres types de sections uniformes ou non, sont envisageables pour les conduits et/ou les cellules correspondantes, le raccordement des uns aux autres pouvant être moins brutal qu'un simple décrochement à angle droit.

La fig. 4 représente une deuxième variante selon laquelle un même conduit peut alimenter en verre fondu plusieurs cellules. Dans cet exemple, des cellules 40 de forme cylindrique sont usinées dans la partie inférieure de la plaque plane formant le fond de la filière, selon une disposition en quinconce. Dans la partie supérieure de ladite plaque, des conduits 41, également cylindriques, sont usinés à cheval sur trois cellules jusqu'à communiquer avec le sommet de la masse de métal 42 qui sépare les cellules 40. Le verre alimentant les conduits 41 s'écoule vers les cellules par les ouvertures 43 créées par l'usinage. Comme pour la variante illustrée par la fig. 2, la base des cellules est fermée par une plaque plane dans laquelle sont percés des orifices 44, à raison de quatre orifices par cellule.

Une troisième variante d'exécution, particulièrement simple, est celle représentée à la fig. 5. C'est le cas où le conduit et la cellule présentent la même section uniforme sur toute leur hauteur. Ils définissent alors une cavité 45 qui peut être, par exemple, cylindrique. La plaque 50 est simplement usinée en laissant à la base des cavités 45 une mince paroi 46 qui est ensuite percée, à raison de plusieurs orifices 47 par cavité. Des organes refroidisseurs, tels que des ailettes 48, peuvent être disposés à proximité de la paroi 46.

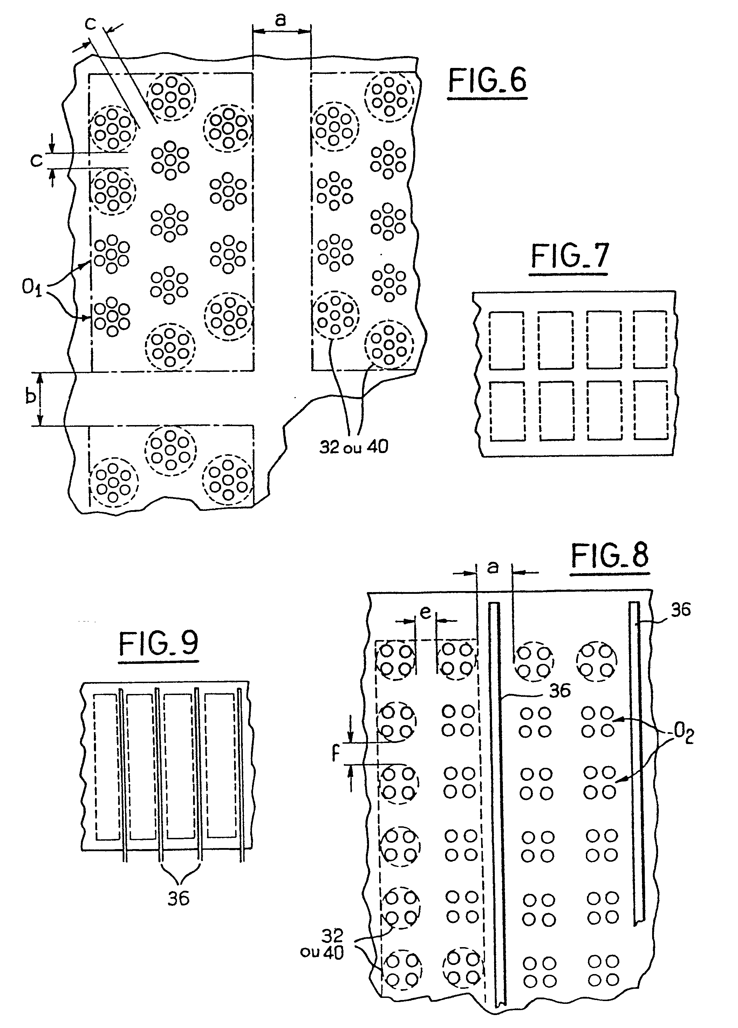

Du fait de la répartition des orifices à la base de chaque cellule ou cavité, ceux-ci se présentent sous forme de groupements régulièrement répartis sur le fond de la filière. Les fig. 6 et 8 représentent deux exemples de groupements d'orifices référencés $O_1$ et $O_2$. Ces groupements comprenant 4 ou 7 orifices sont disposés à la base de cellules 32 ou de cavités 40, telles que représentées fig. 2 et 5.

Le nombre d'orifices par cellule, la distance séparant deux orifices adjacents appartenant à un même groupement ou la distance séparant deux cellules ou cavités adjacentes sont autant de paramètres qui peuvent varier d'un exemple de réalisation à un autre, et qui dépendent du mode de refroidissement utilisé, de la nature de l'alliage choisi pour la face inférieure externe du fond de la filière et de l'épaisseur dudit fond.

Ainsi le fond des filières selon l'invention peut être refroidi par un courant gazeux, et/ou par un dispositif de refroidissement comprenant des ailettes telles que représentées sur les fig. 2, 5, 8 et 9. Ces ailettes possèdent une bonne conductibilité thermique et sont reliées à au moins un tube principal, non représenté, dans lequel circule un liquide réfrigérant, par exemple de l'eau.

Les cellules ou cavités peuvent être disposées en rangées perpendiculairement à l'axe longitudinal de la filière. Ces rangées sont simples, doubles ou multiples en quinconce comme le représentent les fig. 6 et 8. Dans ces deux derniers cas les groupements d'orifices sont rassemblées par zone ainsi que le montrent les fig. 7 et 9.

Les distances «a» et «b» séparant deux zones adjacentes, respectivement dans le sens longitudinal et dans le sens transversal, peuvent varier de 2,5 à 6 mm et de préférence de 3 à 4 mm.

Dans chaque rangée, les distances «c» ou «f» séparant deux cellules ou cavités adjacentes sont au moins égales à 0,2 mm et sont de préférence comprises entre 0,5 et 1,5 mm. La distance «e» qui sépare deux cellules ou cavités adjacentes appartenant à deux rangées différentes, est au plus égale à 5 mm; dans le cas d'une disposition en quinconce (voir fig. 4) cette distance peut être nulle voire négative.

L'épaisseur totale p du fond de filière est comprise entre 3 et 10 mm, alors que l'épaisseur p' de la plaque 33, ou de la paroi 41 peut varier entre 0,2 et 2 mm; p' est de préférence comprise entre 0,4 et 1 mm.

Ces dernières caractéristiques dimensionnelles sont importantes et sont à l'origine de différents avantages présentés par les filières selon l'invention sur les filières connues.

Les filières à fond plat de l'art antérieur sont généralement munies d'une plaque plane, perforée d'une multitude de trous, et de faible épaisseur pour éviter une perte de charge trop élevée lors de l'écoulement du verre dans lesdits trous.

Cette plaque est assez rapidement déformée sous l'effet conjugué de la chaleur et de la pression exercée par le verre. Aussi est-il nécessaire de renforcer le fond de la filière par des nervures, par exemple ainsi que le décrit le brevet US-A-3 988 135.

La structure de la plaque formant le fond de la filière selon l'invention permet d'éviter les déformations grâce à l'épaisseur p sans pour autant augmenter les pertes de charge; de plus, la section de passage des ouvertures à l'entrée de chaque cellule pouvant varier considérablement selon les dimensions des conduits et/ou leur disposition par rapport aux cellules, les nombreuses combinaisons offertes en la matière permettent de limiter les pertes de charge. Par ailleurs l'épaisseur p' qui peut être choisie aussi faible que possible, indépendamment de p, permet d'obtenir des débits élevés à partir d'orifices de faible diamètre.

Outre ces avantages, l'épaisseur p de la plaque permet de refroidir efficacement le verre ou moment de la relance de la filière ou lors de l'opération de fibrage, sans perturber longuement le fonctionnement de ladite filière. Ceci est d'autant mieux marqué, que, pour une épaisseur p déterminée, la quantité d'alliage conservée est plus importante. C'est ainsi que la structure illustrée par la fig. 2 peut être choisie de préférence à celle de la fig. 5, en fonction de la densité d'orifices désirée, ou du mode de refroidissement adopté, par exemple.

Un autre avantage des filières selon l'invention est le suivant: lorsqu'une casse se produit pendant l'opération de fibrage, l'enverrage qui peut en résulter est souvent limité à un groupement d'orifices O; il peut s'étendre à plusieurs groupements appartenant à une même zone mais ne se propagera d'une zone à une autre que dans des cas exceptionnels. Ceci facilite considérablement la relance de la filière et diminue la durée d'intervention de l'opérateur.

Il est bien évident que l'on peut apporter des modifications aux modes de réalisation donnés ci-dessus sans pour autant sortir du cadre de l'invention définie dans les revendications.

**Revendications**

1. Dispositif pour la fabrication de fibres de verre continues (13) comprenant une source d'alimentation en verre par simple gravité reliée à une filière (10) chauffée par effet Joule et dont la face inférieure plane (12) est perforée d'une multitude d'orifices (0) très rapprochés formant des groupements répartis régulièrement par zones, un dispositif de soufflage de gaz (20) implanté de manière à diriger un flux gazeux vers le fond de la filière (10) et/ou des organes refroidisseurs (36, 48) disposés à proximité dudit fond, un dispositif d'enduction (15) des fibres et des organes de guidage (17, 18, 19) et d'étirage mécanique (14) desdites fibres, caractérisé en ce que le fond de la filière est formé d'une plaque plane (30, 50), dont l'épaisseur totale (p) est telle qu'elle permet d'éviter les déformations dudit fond, dans laquelle sont ménagés une multitude de conduits (31, 37, 41) s'ouvrant à leur partie supérieure vers l'intérieur de la filière (10), et à leur partie inférieure vers une multitude de cellules (32, 38, 40), chaque cellule étant en communication avec l'intérieur de la filière (10) par l'intermédiaire d'un desdits conduits, une paroi plane continue (33, 46) fermant la base de chaque cellule, ladite paroi étant perforée de plusieurs orifices (34, 44, 46) formant un groupement d'orifices (0₁, 0₂), et étant d'une épaisseur (p') telle qu'elle autorise des débits élevés à partir desdits orifices.

2. Dispositif de fibrage selon la revendication 1, caractérisé en ce que la base des conduits (31, 37, 41) et le sommet des cellules (32, 38, 40) en communication avec lesdits conduits sont situés dans un même plan (II–II).

3. Dispositif de fibrage selon l'une des revendications précédentes, caractérisé en ce que dans le fond de la filière (10) chaque conduit (31, 37, 41) débouche sur une seule cellule (32, 38, 40).

4. Dispositif de fibrage selon l'une des revendications précédentes, caractérisé en ce que la section de chaque conduit (31, 37, 41) est uniforme sur toute sa hauteur.

5. Dispositif de fibrage selon l'une des revendications précédentes, caractérisé en ce que la section de chaque cellule (32, 38, 40) est uniforme sur toute sa hauteur.

6. Dispositif de fibrage selon l'une des revendications précédentes, caractérisé en ce que la section de chaque conduit (31, 37, 41) est égale à la section de la partie supérieure de chaque cellule (32, 38, 40) communiquant avec ledit conduit.

7. Dispositif de fibrage selon l'une des revendications précédentes, caractérisé en ce que le fond de la filière (10) est d'une seule pièce.

8. Dispositif de fibrage selon l'une des revendications 1 à 6, caractérisé en ce que la paroi fermant la base des cellules (32) est formée d'une plaque plane (33), soudée à la face inférieure de la plaque (30) dans laquelle ont été ménagés les conduits (31) et les cellules (32).

9. Dispositif de fibrage selon l'une des revendications précédentes, caractérisé en ce que le fond de la filière (10) est fabriqué en un même alliage métallique.

10. Dispositif de fibrage selon la revendication 8, caractérisé en ce que la plaque plane (33) fermant la base de chaque cellule (32) est réalisée en un alliage dont l'angle de contact avec le verre chaud porté à 1150 °C est égal ou supérieur à 60 °C.

11. Dispositif de fibrage selon l'une des revendications précédentes, caractérisé en ce que la répartition des cellules (32, 38, 40) dans la plaque (30) est telle qu'elles forment des rangées perpendiculaires à l'axe longitudinal de la filière (10).

12. Dispositif de fibrage selon la revendication 11, caractérisé en ce que les cellules (32, 38, 40) sont disposées en quinconce.

13. Dispositif de fibrage selon l'une des revendications 11 et 12, caractérisé en ce que les cellules (32, 38, 40) sont regroupées par zones.

14. Dispositif de fibrage selon l'une des revendications précédentes, caractérisé en ce que la section de chaque cellule (32, 38, 40) et de chaque conduit (41) est circulaire.

**Patentansprüche**

1. Vorrichtung zur Herstellung von endlosen Glasfasern (13), mit einer Quelle zur Zuführung von Glas durch Schwerkraft, welche mit einer durch Joule-Effekt erwärmten Ziehdüseneinheit (10) verbunden ist, deren ebene Unterseite (12) mit einer Anzahl von engständig angeordneten Öffnungen (0) versehen ist, die regelmässig in Zonen verteilte Gruppen bilden, mit einer derart angeordneten Blaseinrichtung (20), dass ein Gasstrom gegen den Boden der Ziehdüseneinheit (10) und/oder Kühlorganen (36, 48) gerichtet wird, welche in der Nähe des Bodens der Ziehdüseneinheit angeordnet sind, mit einer Einrichtung (15) zum Beschichten der Fasern und mit Einrichtungen zur Führung (17, 18, 19) und zum mechanischen Ziehen (14) der Fasern, dadurch gekennzeichnet, dass der Boden der Ziehdüseneinheit von einer ebenen Platte (30, 50) gebildet ist, deren gesamte Dicke (p) derart bemessen ist, dass Verformungen des Bodens vermieden werden, in welchem eine Anzahl von Kanälen (31, 37, 41) angeordnet sind, die mit ihrem oberen Abschnitt ins Innere der Ziehdüseneinheit (10) und mit ihrem unteren Abschnitt in einer Anzahl von Zellen (32, 38, 40) münden, wobei jede Zelle durch diese Kanäle mit dem Inneren der Ziehdüseneinheit (10) in Verbindung steht und die Basis einer jeden Zelle von einer ebenen kontinuierlichen Wand (33, 46) begrenzt ist, welche mit mehreren, eine Gruppe von Öffnungen ($O_1$, $O_2$) bildenden Öffnungen (34, 44, 46) versehen ist und eine Dicke (p') aufweist, die einen erhöhten Ausstoss aus den Öffnungen zulässt.

2. Vorrichtung nach Anspruch 1, dadurch gekennzeichnet, dass die Basis der Kanäle (31, 37, 41) und der mit den Kanälen in Verbindung stehende Scheitel der Zellen (32, 38 40) in derselben Ebene (II–II) angeordnet sind.

3. Vorrichtung nach einem der vorhergehenden Ansprüche, dadurch gekennzeichnet, dass im Boden der Ziehdüseneinheit (10) jeder Kanal (31, 37, 41) in eine einzige Zelle (32, 38, 40) mündet.

4. Vorrichtung nach einem der vorhergehenden Ansprüche, dadurch gekennzeichnet, dass der Querschnitt eines jeden Kanals (31, 37, 41) über die gesamte Höhe des Kanals gleichmässig ist.

5. Vorrichtung nach einem der vorhergehenden Ansprüche, dadurch gekennzeichnet, dass der Querschnitt einer jeden Zelle (32, 38, 40) über die gesamte Höhe des Kanals gleichmässig ist.

6. Vorrichtung nach einem der vorhergehenden Ansprüche, dadurch gekennzeichnet, dass der Querschnitt eines jeden Kanals (31, 37, 41) gleich dem Querschnitt des oberen Abschnittes einer jeden Zelle (32, 38, 40) ist, welche mit dem Kanal in Verbindung steht.

7. Vorrichtung nach einem der vorhergehenden Ansprüche, dadurch gekennzeichnet, dass der Boden der Ziehdüseneinheit (10) einstückig ausgebildet ist.

8. Vorrichtung nach einem der Ansprüche 1 bis 6, dadurch gekennzeichnet, dass die die Basis der Zellen (32) schliessende Wand aus einer ebenen Platte (33) gebildet ist, die mit der Unterseite der Platte (30) verschweisst ist, in welcher die Kanäle (31) und die Zellen (32) angeordnet sind.

9. Vorrichtung nach einem der vorhergehenden Ansprüche, dadurch gekennzeichnet, dass der Boden der Ziehdüseneinheit (10) aus derselben Metall-Legierung hergestellt ist.

10. Vorrichtung nach Anspruch 8, dadurch gekennzeichnet, dass die die Basis einer jeden Zelle (32) verschliessende Platte (33) aus einer Legierung hergestellt ist, deren Kontaktwinkel mit dem auf eine Temperatur von 1150 °C erhitzten Glas gleich oder grösser als 60° ist.

11. Vorrichtung nach einem der vorhergehenden Ansprüche, dadurch gekennzeichnet, dass die Zellen (32, 38, 40) in der Platte (30) derart verteilt sind, dass sie Reihen senkrecht zur Längsachse der Ziehdüseneinheit (10) bilden.

12. Vorrichtung nach Anspruch 11, dadurch gekennzeichnet, dass die Zellen (32, 38, 40) versetzt angeordnet sind.

13. Vorrichtung nach einem der Ansprüche 11 und 12, dadurch gekennzeichnet, dass die Zellen (32, 38, 40) in Zonen gruppiert sind.

14. Vorrichtung nach einem der vorhergehenden Ansprüche, dadurch gekennzeichnet, dass der Querschnitt einer jeden Zelle (32, 38, 40) und eines jeden Kanals (40) kreisförmig ist.

**Claims**

1. Apparatus for manufacturing continuous glass fibres (13) comprising a source of glass which is supplied merely by gravity, connected to a die (10) heated by Joule's effect and the lower flat face (12) of which is perforated by a multitude of orifices (0) which are very close together which form groups distributed regularly in zones, a gas blowing device (20) implanted in such a way as to direct a flow of gas to the bottom of the die (10) and/or cooling members (36, 48) disposed in proximity of the said bottom, a means (15) of coating the fibres and guide means (17, 18, 19) and means (14) for the mechanical drawing of the said fibres, characterized in that the bottom of the die is constituted by a flat plate (30, 50), the total thickness p of which is such that it makes it possible to avoid deformations of the said bottom, in which there are disposed a multitude of ducts (31, 37, 41) opening at their upper part towards the inside of the die (10) and at their lower part towards a multitude of cells (32, 38, 40), each cell communicating with the interior of the die (10) through the intermediary of one of the said ducts, a continuous flat wall (33, 46) forming the base of each cell, the said wall being perforated with a plurality of orifices (34, 44, 46) forming a group of orifices ($O_1$, $O_2$) and being of a thickness p' such that it permits high rates of flow from the said orifices.

2. Fibring device according to claim 1, characterized in that the base of the ducts (31, 37, 41) and the top of the cells (32, 38, 40) in communication with the said ducts are situated in one and the same plane (II–II).

3. Fibring device according to one of the preceding claims characterized in that in the bottom of the die (10) each duct (31, 37, 41) discharges onto a single cell (32, 38, 40).

4. Fibring device according to one of the preceding claims characterized in that the cross-section of each duct (31, 37, 41) is uniform over all its height.

5. Fibring device according to one of the preceding claims characterized in that the cross-section of each cell (32, 38, 40) is uniform over all its height.

6. Fibring device according to one of the preceding claims characterized in that the cross-section of each duct (31, 37, 41) is equal to the cross-section of the upper part of each cell (32, 38, 40) communicating with the said duct.

7. Fibring device according to one of the preceding claims characterized in that the bottom of the die (10) is in a single piece.

8. Fibring device according to one of claims 1 to 6, characterized in that the wall closing the base of the cells (32) is formed by a flat plate (33) welded to the underside of the plate (30) in which are provided ducts (31) and cells (32).

9. Fibring device according to one of the preceding claims characterized in that the bottom of the die (10) is manufactured from one and the same metal alloy.

10. Fibring device according to claim 8, characterized in that the flat plate (33) closing the base of each cell (32) is made from an alloy of which the angle of contact with the hot glass raised to 1150 °C is equal to or greater than 60°.

11. Fibring device according to one of the preceding claims characterized in that the distribution of cells (32, 38, 40) in the plate (30) is such that they form rows perpendicular to the longitudinal axis of the die (10).

12. Fibring device according to claim 11, characterized in that the cells (32, 38, 40) are disposed in a staggered arrangement.

13. Fibring device according to one of claims 11 and 12 characterized in that the cells (32, 38, 40) are regrouped in zones.

14. Fibring device according to one of the preceding claims characterized in that the cross-section of each cell (32, 38, 40) and of each duct (41) is circular.

FIG_1

FIG_2

FIG_3

FIG_4

FIG_5

FIG.6

FIG.7

FIG.8

FIG.9

32 ou 40

36